# EUROPEAN PATENT APPLICATION

(11) **EP 4 054 118 A1**
(43) Date of publication of application: **07.09.2022**
(21) Application number: 22157460.1
(22) Date of filing: 18.02.2022
(51) Int. Cl.: H04L 9/40, H04L 9/00

(54) **SYSTEMS AND METHODS FOR INCORPORATING MANUFACTURING, TESTING AND AFTER SALE DATA IN A PRINTED CIRCUIT BOARD USING BLOCKCHAIN**

(30) Priority: 13.01.2022 US 202117574876; 05.03.2021 IN 202141009324
(71) Applicant: Goodrich Corporation, Charlotte, NC 28217-4578 (US)
(72) Inventor: PALANIAPPAN, Elangovan, 560049 Bangalore, KA (IN)
(74) Representative: Dehns

(57) **Abstract**

A method for controlling a PCBA data distributed ledger located on blockchain network and a system for implementing the method are disclosed. The method may comprise scanning, by an optical label reader, an optical label located on a PCB and decoding, by an entity device, the optical label. The method may further include receiving, by a ledger controller, a request to access a distributed ledger from the entity device; verifying, by the blockchain nodes, a public key received from the entity device; determining, by the ledger controller, whether a private key received from the entity device matches a stored login credential; and determining whether to allow the entity device to access at least a first block on the distributed ledger.

## Description

### CROSS-REFERENCE TO RELATED APPLICATIONS

This application claims priority to, and the benefit of, Indian Patent Application No. 202141009324, filed March 5, 2021 and titled "SYSTEMS AND METHODS FOR INCORPORATING MANUFACTURING, TESTING AND AFTER SALE DATA IN A PRINTED CIRCUIT BOARD USING BLOCKCHAIN."

### FIELD

The present disclosure relates to printed circuit board assemblies (PCBAs), and, more particularly to systems and methods for incorporating data into a PCBA using blockchain.

### BACKGROUND

During manufacturing, a PCBA may undergo various manufacturing processes such as, for example, circuit design of the printed circuit board (PCB) substrate, circuit and hardware layout design, populating components (e.g., microprocessors, memory chips, gates, resistors, capacitors, etc.) on the PCB substrate, verifying the soldering of components on the PCB substrate, loading the associated firmware on the PCBA, acceptance testing, quality inspection, etc. After the PCBA is manufactured, it may be integrated into a larger electronic apparatus (e.g., an aircraft light unit assembly or other aircraft system). After integration, functionality and other quality tests may be performed. Each of these manufacturing processes may be performed by different entities and/or at different locations. If issues (e.g., faults, manufacturing defects, etc.) are identified, the manufacturing and testing data may be needed to determine where the issue occurred. In this regard, large amounts of data related to the PCBA's design, production, testing, loaded firmware, warranty etc. may be needed by the original equipment manufacturer (OEM), by the company that sells the larger electronic part, by the various entities involved in the manufacture of the PCBA, and/or by the airline or other final part purchaser. Additionally, it is desirable to ensure that the data associated with manufacture and testing of the PCBA is authentic and accurate.

### SUMMARY

A method of controlling a distributed ledger having printed circuit board assembly data and located over a peer-to-peer network is disclosed. In accordance with various embodiments, the method may comprise the steps of scanning, by an optical label reader, an optical label located on a printed circuit board; and decoding, by an entity device, the optical label. The entity device is communication with the optical label reader. The method may further comprise the steps of receiving, by a ledger controller in communication with a first blockchain node, a request to access the distributed ledger from the entity device; requesting, by the ledger controller, a first login credential from the entity device; verifying, by the first blockchain node and at least a second blockchain node connected to the first blockchain node by the peer-to-peer network, a public key received from the entity device; requesting, by the ledger controller, a private login credential from the entity device; receiving, by the ledger controller, a private key from the entity device; and determining, by the first blockchain node, whether to grant access to at least a first block on the distributed ledger to the entity device.

In various embodiments, the optical label may comprise a dynamic quick response code, and the step of decoding the optical label may comprise identifying, by the entity device, a QR ID, a Prod_ID, a URL, and a Time_Stamp encoded in the dynamic quick response code.

In various embodiments, the step of requesting, by the ledger controller, the first login credential from the entity device may comprise: sending, by the ledger controller, instructions to the entity device. The instructions may be configured to cause an application running on the entity device to open a first login page. The first login page may be configured to prompt the public key to be input into the entity device.

In various embodiments, the method may further comprise the steps of determining, by the ledger controller, if the private key matches a stored operator login credential; and identifying, by the ledger controller, a Custodian_ID based on the private key.

In various embodiments, the method may further comprise the steps of receiving, by the ledger controller, the QR_ID, the Prod_ID, and the Time_Stamp; and locating by the ledger controller, the first block using the QR_ID, the Prod ID, and the Custodian_ID.

In various embodiments, the method may further comprise the steps of accessing, by the ledger controller, a data entry log library; locating, by the ledger controller, a data entry log in the data entry log library based on the Custodian_ID; and transmitting, by the ledger controller, the data entry log to the entity device.

In various embodiments, the method may further comprise the steps of creating, by the entity device, a new data entry in the data entry log; and attaching, by the ledger controller, a digital signature to the new data entry.

In various embodiments, the method may further comprise the step of updating, by the ledger controller, the URL and the Time_Stamp in response to the entity device disconnecting from the first blockchain node.

A system for controlling a distributed ledger having printed circuit board assembly data and located over a peer-to-peer network is also disclosed herein. In accordance with various embodiments, the system may comprise a first blockchain node including a ledger controller; and a tangible, non-transitory memory configured to communicate with the ledger controller. The tangible, non-transitory memory may have a first set of instructions stored thereon that, in response to execution by the ledger controller, cause the ledger controller to perform operations, which may comprise receiving, by the ledger controller, a request to access the distributed ledger from an entity device; verifying, by the ledger controller and at least a second blockchain node connected to the first blockchain node by the peer-to-peer network, a blockchain_ID and a password received from the entity device; requesting, by the ledger controller, a private login credential from the entity device; receiving, by the ledger controller, a private key from the entity device; determining, by the ledger controller, if the private key matches a stored login credential; and determining, by the ledger controller, whether to grant access to at least a first block on the distributed ledger to the entity device.

In various embodiments, the operations may further comprise sending, by the ledger controller, a second set of instructions to the entity device, the second set of instructions being configured to cause an application running on the entity device to open a first login page, wherein the first login page is configured to allow the blockchain_ID and the password to be input into the entity device.

In various embodiments, the operations may further comprise receiving, by the ledger controller, a QR ID, a Prod_ID, and a Time-Stamp decoded from an optical label by the entity device. In various embodiments, the operations may further comprise identifying, by the ledger controller, a Custodian_ID based on the private key.

In various embodiments, the operations may further comprise locating, by the ledger controller, the first block using the QR_ID, the Prod ID, and the Custodian_ID. In various embodiments, the operations may further comprise accessing, by the ledger controller, a data entry log library; locating, by the ledger controller, a data entry log in the data entry log library based on the Custodian_ID; and transmitting, by the ledger controller, the data entry log to the entity device.

In various embodiments, the operations may further comprise determining, by the ledger controller, a digital signature based on the private key; and attaching, by the ledger controller, the digital signature to a new data entry in the data entry log.

In various embodiments, the operations may further comprise updating, by the ledger controller, a URL and a Time_Stamp of a dynamic quick response code located on the printed circuit board assembly in response to the entity device disconnecting from the first blockchain node.

An article of manufacture is also disclosed herein. In accordance with various embodiments, article of manufacture includes a non-transitory, tangible computer readable storage medium having instructions stored thereon that, in response to execution by a ledger controller, cause the ledger controller to perform operations, which comprise receiving, by the ledger controller, a request to access a distributed ledger; verifying, by the ledger controller, a public key received from an entity device; requesting, by the ledger controller, a private login credential from the entity device; receiving, by the ledger controller, a private key from the entity device; determining, by the ledger controller, if the private key matches a stored login credential; and determining, by the ledger controller, if data may be uploaded to the distributed ledger by the entity device.

In various embodiments, the operations may further comprise receiving, by the ledger controller, a request to perform a testing operation configured to generate test data; determining, by the ledger controller, if a data entry log located on the distributed ledger comprises an data entry including at least one of the test data or a digital signature assigned to the private key is located on the distributed ledger; and denying, by the ledger controller, the request to perform the testing operation in response to identifying the data entry including at least one of the test data or the digital signature assigned to the private key is located on the distributed ledger.

In various embodiments, the operations may further comprise identifying, by the ledger controller, a Custodian_ID based on the private key. In various embodiments, the operations may further comprise updating, by the ledger controller, a URL and a Time_Stamp of a dynamic quick response code located on a printed circuit board assembly in response to the entity device disconnecting from the distributed ledger.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals denote like elements.
FIG. 1 illustrates a PCBA having an optical label, in accordance with various embodiments;
FIG. 2 illustrates an exemplary PCB lifecycle data accumulation system comprising a distributed ledger on a blockchain network, in accordance with various embodiments; and
FIG. 3 illustrates a process flow for accessing and uploading PCBA data on a distributed ledger on a blockchain network, in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the exemplary embodiments of the disclosure, it should be understood that other embodiments may be realized and that logical changes and adaptations in design and construction may be made in accordance with this disclosure and the teachings herein. Thus, the detailed description herein is presented for purposes of illustration only and not limitation. The steps recited in any of the method or process descriptions may be executed in any order and are not necessarily limited to the order presented. Furthermore, any reference to singular includes plural embodiments, and any reference to more than one component or step may include a singular embodiment or step.

As used herein, the term "non-transitory" is to be understood to remove only propagating transitory signals per se from the claim scope and does not relinquish rights to all standard computer-readable media that are not only propagating transitory signals per se. Stated another way, the meaning of the term "non-transitory computer-readable medium" and "non-transitory computer-readable storage medium" should be construed to exclude only those types of transitory computer-readable media which were found in *In re Nuijten* to fall outside the scope of patentable subject matter under 35 U.S.C. § 101.

As used herein, "electronic communication" means communication of at least a portion of the electronic signals with physical coupling (e.g., "electrical communication" or "electrically coupled") and/or without physical coupling and via an electromagnetic field (e.g., "inductive communication" or "inductively coupled" or "inductive coupling"). As used herein, "transmit" may include sending at least a portion of the electronic data from one system component to another (e.g., over a network connection). Additionally, as used herein, "data," "information," or the like may include encompassing information such as commands, queries, files, messages, data for storage, and the like in digital or any other form.

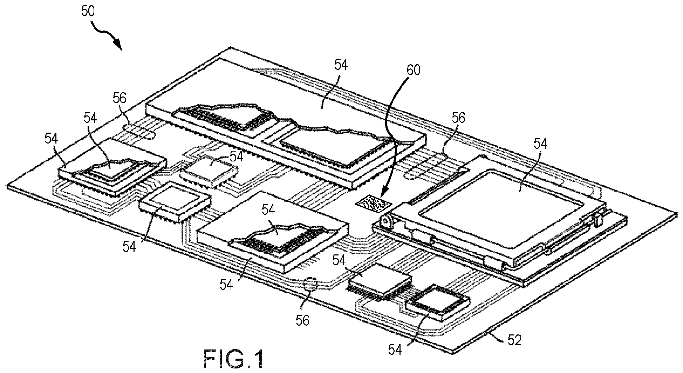

FIG. 1 illustrates a printed circuit board assembly (PCBA) 50. Printed circuit board assembly 50 includes a substrate or printed circuit board (PCB) 52 and a plurality of semiconductor packages 54 mounted to PCB 52. PCBA 50 may include one type or multiple types of semiconductor packages 54, depending on the application. The different types of semiconductor packages 54 shown in FIG. 1 are for purposes of illustration only.

PCBA 50 can be a stand-alone system that uses the semiconductor packages 54 to perform one or more electrical functions. In various embodiments, PCBA 50 may be a subcomponent of a larger system. For example, PCBA 50 may be part of an aircraft system, such as an aircraft light unit assembly. Semiconductor packages 54 may include microprocessors, memories, application specific integrated circuits (ASIC), microelectromechanical systems (MEMS), logic circuits, analog circuits, radio frequency (RF) circuits, discrete devices, or other semiconductor die or electrical components. PCB 52 provides a substrate for structural support and electrical interconnect of the semiconductor packages 54 mounted on the PCB 52. Conductive signal traces 56 are formed over a surface and/or within layers of PCB 52. Signal traces 56 may be formed using evaporation, electrolytic plating, electroless plating, screen printing, or other suitable metal deposition process. Signal traces 56 provide for electrical communication between semiconductor packages 54, mounted components, and other external system components. Signal traces 56 may also provide power and ground connections to each of the semiconductor packages 54.

In accordance with various embodiments, PCBA 50 includes a machine-readable optical label 60. Stated differently, a machine-readable optical label 60 is formed on PCB 52. Optical label 60 may comprise a one dimension barcode, a two dimension barcode, a radio frequency identification (RFID), or other scannable identification tag. In various embodiments, optical label 60 is a dynamic quick response (QR) code. Embedded in the optical label 60 is a uniform resource locator ("URL"), a QR identification code (QR_ID), a product identification code (Prod_ID), and a time stamp (Time_Stamp). The QR_ID and the Prod_ID are unique to the PCBA 50. For example, each optical label 60 may include a unique 32 bit QR_ID and a unique number (e.g., a unique serial or other identifying number) Prod_ID. In this regard, multiple PCBAs, similar to PCBA 50, may be manufactured and each of the PCBAs will be associated with its own unique QR_ID and unique Prod_ID. Stated differently, a first PCBA will have a first optical label encoded with a first QR_ID and a first Prod ID, and a second PCBA will have a second optical label encoded with a second QR ID and a second Prod_ID, which are different, respectively, from the first QR_ID and the first Prod_ID. Each PCBA being associated with a unique QR_ID and a unique Prod_ID allows the QR_ID and the Prod_ID to be employed to identify a particular PCBA and a distributed ledger to which data related to that particular PCBA 50 and its components (e.g., PCB 52 and semiconductor packages 54) may be uploaded and stored.

PCBA 50 may undergo various manufacturing, assembly, testing, and quality evaluation processes. These processes may be performed by multiple different entities. For example, a first entity may design the circuit layout of PCB 52, a second entity may bond semiconductor packages 54 to PCB 52, a third entity may perform testing of PCBA 50, and a fourth entity may perform quality checks and/or tests on the larger system that incorporates PCBA 50. Each of these processes may be associated with and/or may generate data (e.g., design and materials information, test results, etc.) related to PCBA 50. Additional entities associated with after sale processing of PCBA 50 may also generate data (e.g., maintenance reports, warranty information, hours of use, field failures, etc.) related to PCBA 50. It may be desirable to have all, or substantially all, of the data related to the manufacturing, assembly, testing, and after sale processes performed on PCBA 50 uploaded to a single database (e.g., to a distributed ledger).

In accordance with various embodiments, a system is disclosed herein that may allow each of the various entities involved in the manufacture, assembly, testing, and/or after sale processing of PCBA 50 to upload their respective data to a distributed ledger. As described in further detail below, the system may be configured to control what entities may upload data and/or what data may be uploaded by a particular entity and/or what data on the distributed ledger may be accessed and/or viewed by a particular entity. For example, the system may restrict an entity that produced circuit design data from uploading and/or accessing testing data or maintenance records. The system may be configured to allow persons viewing the distributed ledger to identify which entity uploaded what data and/or to determine at what moment in the lifecycle of PCBA 50 the data was uploaded. In accordance with various embodiments, the system is configured to allow entities to access the distributed ledger and data contained thereon by scanning the optical label 60 and inputting the required authorization information (e.g., passwords). The system thus allows data generated over the entire lifecycle of PCBA 50 to be accessed at any time and by anyone that possess the PCBA 50 (and the required authorization). For example, if trouble shooting a PCBA 50 that has experienced a fault condition, the relevant data can be viewed by the required stakeholders to determine where the fault may have occurred and/or where it did not occur. For example, if a semiconductor package 54 is not functioning properly and testing performed after the soldering of semiconductor packages 54 to PCB 52 showed no fault condition, then it may be determined that the fault was caused in a later process. The disclosed system tends to avoid the need to generate, store, and/or transfer physical (e.g., paper) documents between entities. Further, employing a distributed ledger system may ensure an authenticity of the entries in the distributed ledger and/or the identity of the entities uploading data, which tends to increase trust between the original equipment manufacturer (OEM) of PCBA 50 and the entities to which the OEM may outsource work related to PCBA 50 and/or between the OEM and the manufacturer of the larger part into which PCBA 50 is incorporated and/or between other various stakeholders in PCBA 50.

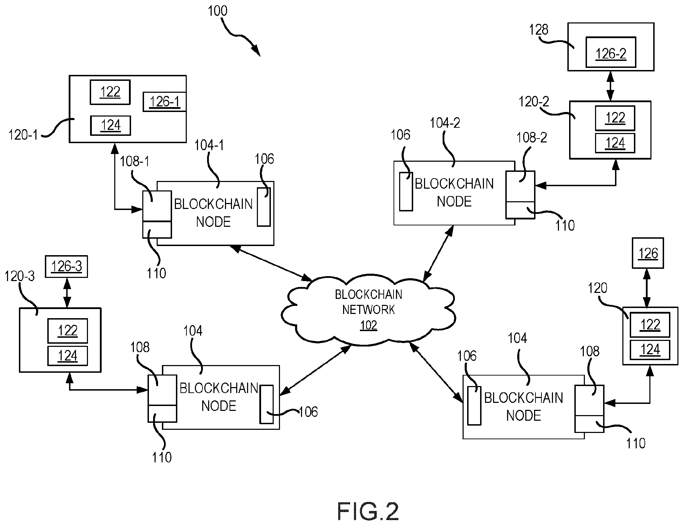

With reference to FIG. 2, a PCBA lifecycle data accumulation system 100 is depicted. In accordance with various embodiments, PCBA lifecycle data accumulation system 100 may be implemented on a blockchain network 102. Blockchain network 102 may be comprised of a plurality of blockchain nodes 104. While four (4) blockchain nodes 104 are illustrated, blockchain network 102 and system 100 may include any number of blockchain nodes 104.

As used herein, the term "network" includes any cloud, cloud computing system or electronic communications system or method that incorporates hardware and/or software components. Communication among the parties may be accomplished through any suitable communication channels, such as, for example, a telephone network, an extranet, an intranet, Internet, point of interaction device (point of sale device, personal digital assistant, cellular phone, kiosk, tablet, etc.), online communications, satellite communications, off-line communications, wireless communications, transponder communications, local area network (LAN), wide area network (WAN), virtual private network (VPN), networked or linked devices, keyboard, mouse and/or any suitable communication or data input modality. Moreover, although the system 100 is frequently described herein as being implemented with TCP/IP communications protocols, the system 100 may also be implemented using IPX, AppleTalk, IP-6, NetBIOS, OSI, any tunneling protocol (e.g., IPsec, SSH, etc.), or any number of existing or future protocols.

In accordance with various embodiments, PCBA lifecycle data accumulation system 100 includes a distributed ledger 106, which is maintained by a plurality of computing devices (e.g., blockchain nodes 104) over a peer-to-peer network (e.g., blockchain network 102). Each blockchain node 104 maintains a copy and/or a partial copy of the distributed ledger 106 and communicates with the other blockchain nodes 104 in the blockchain network 102 to validate and write data to the distributed ledger 106. The distributed ledger 106 may use features and functionality of blockchain technology, including, for example, consensus based validation, immutability, and cryptographically chained blocks of data. In this regard, distributed ledger 106 may comprise a plurality of interconnected blocks containing data related to, and generated over the lifecycle of, PCBA 50. The distributed ledger 106 employing a blockchain may provide enhanced security because each block may hold individual transactions and the results of any blockchain executables. Each block may link to the previous block and may include a timestamp. Blocks may be linked because each block may include the hash of the prior block in the blockchain. The linked blocks form a chain, with only one successor block allowed to link to one other predecessor block for a single chain. Forks may be possible where divergent chains are established from a previously uniform blockchain, though typically only one of the divergent chains will be maintained as the consensus chain.

Blockchain nodes 104 may be configured to communicate with operator devices 120 (referred to herein as "entity devices") such as, for example, computers, tablets, smartphones, Internet of Things devices ("IoT" devices), etc. Operators (e.g., entity employees) may use entity devices 120 to upload PCBA 50 data generated by the entity. Applications deployed by and/or included on the entity devices 120 may communicate with the distributed ledger 106 (e.g., via a blockchain node 104 and a ledger controller 108) to transmit and retrieve data. In various embodiments, a governing organization or consortium may control access to data stored on the blockchain. Registration with the managing organization(s) may enable participation in the blockchain network 102. In various embodiments, system 100 may employ a consortium blockchain, which may allow for increased transparency as validation is performed, for example, using data stored by a decentralized autonomous organization (DAO) instead of a specific centralized organization.

Each blockchain node 104 communicates with a ledger controller or processor 108 configured to perform functions related to the processing and management of the distributed ledger 106, including, for example, controlling access to the distributed ledger 106, verification of proposed distributed ledger entries, verification of digital signatures, generation of new blocks, validation of new blocks, and/or maintaining of a copy of the distributed ledger 106. Ledger controller 108 may comprise any suitable combination of hardware and/or software as known in the art and may run on each blockchain node 104 within a secure environment in a data center, cloud storage, or the like.

A tangible, non-transitory computer-readable storage medium 110 may be in communication with the ledger controller 108. Storage medium 110 may comprise any tangible, non-transitory computer-readable storage medium known in the art. The storage medium 110 has instructions stored thereon that, in response to execution by ledger controller 108, cause ledger controller 108 to perform operations related to controlling access to distributed ledger 106. For example, a first blockchain node 104-1 and first ledger controller 108-1 may be configured to communicate with, at least, a second blockchain node 104-2 and a second ledger controller 108-2 to grant and deny access to the distributed ledger 106, verify proposed blockchain entries, verify digital signatures, generate new blocks, validate new blocks, and/or maintain of a copy of the distributed ledger 106. In accordance with various embodiments, distributed ledger 106 is a blockchain comprised of at least a plurality of linked blocks, as described above. When implemented in support of system 100, the blockchain of distributed ledger 106 may serve as an immutable data log containing multiple data entries (i.e. blocks) generated over the lifecycle of PCBA 50.

Ledger controller 108 may be configured to control the process of searching for, registering, and/or propagating data to distributed ledger 106; validating received login credentials by matching the login credential against stored login credentials; and generating and/or transmitting various statuses, confirmations, permissions, or the like. Ledger controller 108 may be configured to access and maintain a stored data map comprising stored data or metadata indicating the position of stored data in distributed ledger 106. In various embodiments, system 100 may employ a Merkle tree data structure and ledger controller 108 may be configured to locate the proper distributed ledger 106 and/or block on the distributed ledger 106 using the information in optical label 60. For example, each leaf node of the Merkle tree may be filled with a QR_ID with the Prod_ID being the root of the tree. A SHA-256 protocol may be employed as the hash function in the Prod ID generation algorithm. The advantage of using this data structure is that each QR_ID (i.e., leaf node of the Merkle Tree) can be tracked by computing a number of hash calculations, which is linearly proportional to the logarithm of the number of leaf nodes of the tree. Compared with a linear search, this technique tends to decrease the workload for the blockchain network 102.

System 100 may include a plurality of entity devices 120 configured to communicate with distributed ledger 106 via a blockchain nodes 104 and ledger controllers 108. For example, a first entity device 120 may communicate with distributed ledger 106 via first blockchain node 104-1 and first ledger controller 108-1. Entity devices 120 may comprise any suitable combination of hardware and/or software. Entity devices 120 may be a desktop computer, laptop, notebook, hand held computer, personal digital assistant, cellular phone, smart phone (e.g., iPhone^{®}, BlackBerry^{®}, Android^{®}, etc.) tablet, wearable (e.g., smart watches, smart glasses, etc.), Internet of things (IoT) device, smart speaker, or any other device capable of interacting with blockchain node 104 and ledger controller 108. Each entity device 120 may include a processor 122 (also referred to as a device processor) and a tangible, non-transitory computer-readable storage medium 124 in communication with the device processor 122. Device processor 122 may be configured to run applications to interact with distributed ledger 106, via a blockchain node 104 and ledger controller 108. Storage medium 124 may comprise any tangible, non-transitory computer-readable storage medium known in the art. The storage medium 124 has instructions stored thereon that, in response to execution by device processor 122, cause device processor 122 to perform operations related to communicating with blockchain nodes 104. Entity devices 120 may communicate with blockchain nodes 104 and ledger controller 108 to review data located on distributed ledger 106, upload data (i.e. create new blocks) to distributed ledger 106, perform crypto operations, and otherwise operate within system 100.

Although the present disclosure shows four (4) entity devices 120, it should be understood that the principles of the present disclosure may be applied to a PCBA lifecycle data accumulation system 100 having any suitable number of entity devices 120 connected to and/or interacting with blockchain network 102. In this regard, PCBA lifecycle data accumulation system 100 may be scaled to allow for any desired number of entity devices 120 to access distributed ledger 106.

Each time an entity device 120 interacts with and/or uploads data related to PCBA 50, the event may be captured in the distributed ledger 106. In this regard, distributed ledger 106 may include a complete lifecycle history of PCBA 50. Each time an event occurs, the relevant entity (i.e., entity device 120) may perform a number of interactions with blockchain node 104 and ledger controller 108, which may result in the uploading of data (i.e., creation of new blocks) to distributed ledger 106. The ledger controller 108 may be configured to grant access to the blockchain network 102 and distributed ledger 106 and/or to allow new blocks to be created after confirmation by other blockchain nodes 104 using traditional methods and systems. Ledger controller 108 may be configured to identify an entity, for example, locate a Custodian_ID as described in further detail below, based on information provided by the entity device 120. For example, ledger controller 108 may locate a stored Custodian_ID that is associated with a private key (e.g., a biologic input or password unique to each operator of the entity device 120) provided by an operator of entity device 120. In various embodiments, ledger controller 108 may be configured to grant access to certain blocks on distributed ledger 106 and deny access to other blocks based on the Custodian_ID. Ledger controller 108 may be configured to determine what type of data entry is associated with a particular Custodian_ID and only allow blocks including that type of data to uploaded or viewed by operators associated with that particular Custodian_ID.

Ledger controller 108 may maintain or be in communication with a data entry log library. The data entry log library may include a plurality of different data entry logs, or data entry templates. Each data entry log may be associated with a particular type of data entry. For example, a circuit design (or first) data entry log may be configured to receive circuit design files (i.e., a first type of data entry). Stated differently, circuit design files for PCBA 50 may be uploaded to the circuit design entry data log. A solder testing (or second) data entry log may be configured to receive testing result (i.e., a second type of data entry) generated in response to a testing operation performed on PCBA 50. Stated differently, solder testing files for PCBA 50 may be uploaded to the solder testing data entry log. In accordance with various embodiments, uploading data (or files) into the data entry log generates a new block in distributed ledger 106. In this regard, distributed ledger 106 may include a plurality of connected blocks with each block including at least one entry into a data entry log.

Ledger controller 108 is configured to locate a particular data entry log in the data entry log library based on the Custodian_ID. In various embodiments, ledger controller 108 may be configured to restrict and/or deny certain entities (i.e. Custodian_IDs) from viewing and/or accessing certain data entry logs (i.e., blocks on distributed ledger 106). For example, a Custodian_ID corresponding to a first entity (e.g., a solder testing entity) may be not be allowed to access the blocks (i.e., data entry logs) containing circuit design data. In this regard, system 100 is configured to allow any or all desired data entry logs to "travel" with PCBA 50, while maintaining control over who may access the data. Controlling data access tends to increase trust and security between an OEM and outsource entities by reducing the chances that propriety data of the OEM or of a particular entity will accessed by an unauthorized party.

Entity devices 120 are each in communication with an optical label reader 126. Optical label reader 126 is configured to read optical label 60 on PCBA 50. Optical label reader 126 may include an optical scanner, camera, barcode reader, RFID reader, or any other device capable of reading optical label 60. Device processor 122 may be in communication with optical label reader 126 and may include software capable of interpreting (i.e., decoding) the information encoded in optical label 60. In this regard, device processor 122 may transfer or output information corresponding to the URL, QR_ID, Prod_ID, and Time_Stamp embedded in optical label 60 to blockchain node 104 and ledger controller 108.

In various embodiments, optical label reader 126 may be included on entity device 120. For example, entity device 120-1 may be a tablet or a smart phone and optical label reader 126-1 may be a camera included on the tablet or the smart phone. In various embodiments, optical label reader 126 may be discreate from entity device 120. For example, optical label reader 126-3 may be a handheld scanner that communicates, via wired or wireless connection, with entity device 120-3.

In various embodiments, one or more optical label reader(s) 126 may be included on a piece of equipment that is discrete from its respective entity device 120. For example, an optical label reader 126-2 may be attached to piece of testing equipment 128. Optical label reader 126-2 may be configured to scan the optical label 60 on PCBA 50 prior to PCBA 50 being processed by the testing equipment 128. In various embodiments, the testing equipment 128 communicates, via wired or wireless connection, with entity device 120-2. In various embodiments, if a block containing testing data is already included on distributed ledger 106, testing equipment 128 may be prevented from performing a testing operation on PCBA 50. For example, in response to optical label reader 126-2 scanning optical label 60, a request to perform a testing operation may be sent from entity device 120-2 to blockchain node 104-2 and ledger controller 108-2. The request to perform a testing operation may include a request to create a new block containing the test data (e.g., a request to upload testing data to a data entry log associated with the testing operation). In response to receiving a request to perform a testing operation, blockchain node 104-2 and ledger controller 108-2 may determine if distributed ledger 106 already includes a block comprising test data and/or a block having the digital signature associated with the operator of the entity device 120-2. If ledger controller 108-2 identifies a block containing test data (e.g., if the data entry log associated with the testing operation has a data entry including testing data) and/or a block having the digital signature associated with the operator of the entity device 120-2, ledger controller 108-2 may deny the request to perform the testing operation. In this regard, system 100 may decrease occurrences of tests or other PCBA data generation processes being inadvertently duplicated (i.e., performed twice).

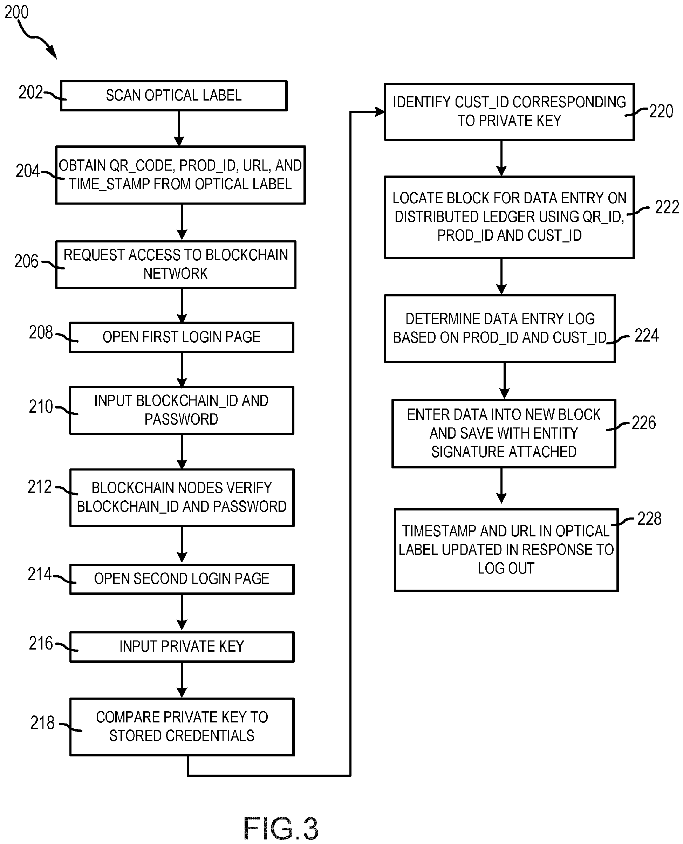

Referring now to FIG. 3 a method 200 is illustrated. The steps recited in any of the method or process descriptions may be executed in any order and are not limited to the order presented. It will be appreciated that the following description makes appropriate references not only to the steps depicted in FIG. 3, but also to the various system components as described above with reference to FIG. 1 and FIG. 2. In various embodiments, the steps of method 200 may be carried out by system 100. In various embodiments, ledger controller 108 may be configured to carry out one or more of the steps or processes associated with blockchain node 104, and device processor 122 may be configured to carry out one or more the steps or processes associated with entity device 120.

Method 200 may be a method for controlling and uploading data related to a PCBA to a distributed ledger. In accordance with various embodiments, an operator may interact with entity device 120, via a mobile application, IoT, web browser, or the like, to request access to distributed ledger 106. For example, the operator may desire to access distributed ledger 106 to view PCBA 50 data previously written and/or uploaded to distributed ledger 106 and/or to write or upload new data related to PCBA 50 to distributed ledger 106. In that respect, an operator of entity device 120 may scan optical label 60 (step 202).

Device processor 122 is operably coupled to optical label reader 126. Device processor 122 is configured interpret (i.e., decode) optical label 60 to obtain the QR_ID, the Prod ID, the URL, and the Time_Stamp encoded in optical label 60 (step 204). Using the URL encoded in the optical label 60, entity device 120 may send a request to access blockchain network 102 and distributed ledger 106 via blockchain node 104 to ledger controller 108 (step 206). In response to the request, ledger controller 108 may send instructions to entity device 120 configured to cause entity device 120 to open and display a first login page (step 208). The first login page may prompt the operator of entity device 120 to enter a public key (e.g., a blockchain ID and a password) (step 210). The same public key (e.g., blockchain ID and password) may be provided to, and/or known by, and/or used by one or more entity devices 120.

Entity device 120 transmits the public key (e.g., blockchain ID and password) to ledger controller 108 and first blockchain node 104. Each of the other blockchain nodes 104 in blockchain network 102 must then verify (i.e., approve) the public key (step 212). In various embodiments, the public key may include a blockchain ID and a password. During step 212, ledger controller 108 may generate a connection between entity device 120 and blockchain network 102.

In response to receiving the approval from blockchain nodes 104, ledger controller 108 may send instructions to entity device 120 configured to cause entity device 120 to open and display a personal credentials login page (i.e., a second login page) on entity device 120 (step 214). The personal credentials login may prompt the operator of entity device 120 to input a private key. The private key may comprise any suitable identifier, such as, for example, an operator ID and a password, a biometric input (e.g., a fingerprint, facial recognition scan, eye scan, etc.), or the like. Each operator of entity device 120 may be associated with a unique private key. In other words, a first operator will have a first private key and a second operator will have a second private key different from the first private key.

Entity device 120 transmits the private key to blockchain node 104 and ledger controller 108. Ledger controller 108 may compare the private key to stored operator credentials (step 218). In response to verifying (i.e., matching) the private key to a stored operator credential, ledger controller 108 may determine to grant entity device 120 access to one or more blocks on distributed ledger 106.

In various embodiments, ledger controller 108 may identify a Custodian_ID associated with the matched private key (step 220). For example, each registered operator in the blockchain network will have a private key. The private key is known to the operator alone and serves as the operator's digital identification. The private key grants an operator ownership for a given address. When generating a private key, a corresponding Custodian_ID is stored with private key. In addition to a Custodian_ID, when generating the private key, a corresponding digital signature is stored with the private key. The digital signature may be unique to each private key. In various embodiments, the digital signature may be a hash generated by the blockchain node 104. The digital signature is entered in a data entry log of the distributed ledger 106 each time the private key is matched to the stored operator credential to indicate the distributed ledger 106 has been accessed and/or updated by the operator associated with that private key at particular time. In this regard, the operator updating and/or accessing a data entry log on the distributed ledger 106 at a given time may be identified by the recordation of the digital signature and the Time_Stamp in the ledger. The Custodian_ID may be used to determine which data entry logs may accessed and/or view, but may not be included (i.e., written into) the data entry logs. In various embodiments, a Custodian_ID may be associated with more than one private key, but a digital signature is be associated with only one private key. For example, multiple operators (employees) within one entity may be assigned the same Custodian_ID, but each of the operators will have a unique digital signature.

In response to receiving verification that the private key has been matched, ledger controller 108 may locate a particular data entry log, or block, on the distributed ledger (step 222) using the QR_ID and Prod_ID received from entity device 120 and the Custodian_ID associated with the private key. In this regard, using the QR_ID and Prod_ID from the optical label 60 and the Custodian_ID associated with the current operator of entity device 120, blockchain node 104 may match the QR_ID, Prod_ID, and Cust_ID to a corresponding ledger address to determine which blocks the entity device 120 is requesting to access. In various embodiments, a Merkle tree is used to find the corresponding ledger block quickly without checking through all the blocks. In this regard, the Prod ID is the root of the Merkle tree and each leaf node is associated with a QR_ID. The Prod ID generation algorithm (e.g., a SHA-256 protocol) may be employed as the hash function. The advantage of using this Merkle tree data structure is that each QR_ID (i.e., leaf node) can be tracked by computing a number of hash calculations, which is linearly proportional to the logarithm of the number of leaf nodes of the tree. Compared with a linear search, this technique tends to greatly decreases the workload for blockchain network.

Ledger controller 108 may access a data entry log library and determine which data entry log is to be provided to entity device 120 based on the Prod_ID and Custodian_ID (step 224). Stated differently, Prod ID and Custodian_ID may determine which data entry log is provided to entity device 120. In various embodiments, certain Custodian_IDs may only be allowed to access certain of data entry logs. Stated differently, ledger controller 108 may determine whether to grant or deny access to a data entry log on distributed ledger 106 based on the Custodian_ID.

In accordance with various embodiments, entity device 120 may write a new block by entering or uploading data into the data entry log provided by ledger controller 108 (step 226). In response to completing the new data entry, the new block is saved to the updated distributed ledger 106 with the digital signature of the operator (i.e., the digital signature associated with the private key) attached to the new block. Stated differently, the updated data entry log (i.e., data entry log which now includes the newly added data entry) is crypted into hash values and stored in the distributed ledger 106 with a timestamp. Once the data is stored in the blockchain, the data can generally not be modified or deleted, as the hash values of the newly added data will be added and stored sequentially to the blockchain. After uploading the new data, entity device 120 may disconnect from distributed ledger 106, ledger controller 108, and blockchain network 102. For example, in response the entity device 120 logging off (or an inactivity time out), the connection between entity device 120 and the blockchain network 102 is terminated. In various embodiments, ledger controller 108 may be configured to update the Time_Stamp and the URL associated with the optical label 60 in response to entity device 120 disconnecting from blockchain network 102 (step 228).

System 100 and method 200 may thus allow any or all desired data accumulated over the lifecycle of PCBA 50 to be included on and accessible from PCBA 50, while maintaining control over who may access the data. Controlling data access tends to increase trust and security between an OEM and outsource entities by reducing the chances that propriety data of the OEM or of a particular entity will accessed by an unauthorized party. Employing distributed ledger 106 decrease opportunity for tampering, thereby increasing the authenticity of the data.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods, and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f), unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method (200) of controlling a distributed ledger having printed circuit board assembly data and located over a peer-to-peer network, the method comprising:
scanning, by an optical label reader, an optical label located on a printed circuit board;
decoding, by an entity device, the optical label, the entity device being in communication with the optical label reader;
receiving, by a ledger controller in communication with a first blockchain node, a request to access the distributed ledger from the entity device;
requesting, by the ledger controller, a first login credential from the entity device;
verifying, by the first blockchain node and at least a second blockchain node connected to the first blockchain node by the peer-to-peer network, a public key received from the entity device;
requesting, by the ledger controller, a private login credential from the entity device;
receiving, by the ledger controller, a private key from the entity device; and
determining, by the first blockchain node, whether to grant access to at least a first block on the distributed ledger to the entity device.

2. The method of claim 1, wherein the optical label comprise a dynamic quick response code, and wherein decoding the optical label comprises, identifying, by the entity device, a QR_ID, a Prod ID, a URL, and a Time_Stamp encoded in the dynamic quick response code.

3. The method of claim 2, wherein requesting, by the ledger controller, the first login credential from the entity device comprises:
sending, by the ledger controller, instructions to the entity device, the instructions being configured to cause an application running on the entity device to open a first login page, wherein the first login page is configured to prompt the public key to be input into the entity device, or further comprising:
determining, by the ledger controller, if the private key matches a stored operator login credential; and
identifying, by the ledger controller, a Custodian_ID based on the private key.

4. The method of claim 3, further comprising:
receiving, by the ledger controller, the QR_ID, the Prod_ID, and the Time_Stamp; and
locating, by the ledger controller, the first block using the QR_ID, the Prod ID, and the Custodian_ID.

5. The method of claim 4, further comprising:
accessing, by the ledger controller, a data entry log library;
locating, by the ledger controller, a data entry log in the data entry log library based on the Custodian_ID; and
transmitting, by the ledger controller, the data entry log to the entity device.

6. The method of claim 5, further comprising:
creating, by the entity device, a new data entry in the data entry log; and
attaching, by the ledger controller, a digital signature to the new data entry, and optionally further comprising updating, by the ledger controller, the URL and the Time_Stamp in response to the entity device disconnecting from the first blockchain node.

7. A system for controlling a distributed ledger having printed circuit board assembly data and located over a peer-to-peer network, the system comprising:
a first blockchain node including a ledger controller; and
a tangible, non-transitory memory configured to communicate with the ledger controller, the tangible, non-transitory memory having a first set of instructions stored thereon that, in response to execution by the ledger controller, cause the ledger controller to perform operations comprising:
receiving, by the ledger controller, a request to access the distributed ledger from an entity device;
verifying, by the ledger controller and at least a second blockchain node connected to the first blockchain node by the peer-to-peer network, a blockchain_ID and a password received from the entity device;
requesting, by the ledger controller, a private login credential from the entity device;
receiving, by the ledger controller, a private key from the entity device;
determining, by the ledger controller, if the private key matches a stored login credential; and
determining, by the ledger controller, whether to grant access to at least a first block on the distributed ledger to the entity device.

8. The system of claim7, wherein the operations further comprise sending, by the ledger controller, a second set of instructions to the entity device, the second set of instructions being configured to cause an application running on the entity device to open a first login page, wherein the first login page is configured to allow the blockchain_ID and the password to be input into the entity device.

9. The system of claim 7 or 8, wherein the operations further comprise receiving, by the ledger controller, a QR_ID, a Prod_ID, and a Time-Stamp decoded from an optical label by the entity device.

10. The system of claim 9, wherein the operations further comprise identifying, by the ledger controller, a Custodian_ID based on the private key, or wherein the operations further comprise locating, by the ledger controller, the first block using the QR_ID, the Prod ID, and the Custodian_ID.

11. The system of claim 10, wherein the operations further comprise:
accessing, by the ledger controller, a data entry log library; and
locating, by the ledger controller, a data entry log in the data entry log library based on the Custodian_ID; and
transmitting, by the ledger controller, the data entry log to the entity device, and optionally wherein the operations further comprise:
determining, by the ledger controller, a digital signature based on the private key; and
attaching, by the ledger controller, the digital signature to a new data entry in the data entry log.

12. The system of claim 9, wherein the operations further comprise updating, by the ledger controller, a URL and a Time_Stamp of a dynamic quick response code located on the printed circuit board assembly in response to the entity device disconnecting from the first blockchain node.

13. An article of manufacture including a non-transitory, tangible computer readable storage medium having instructions stored thereon that, in response to execution by a ledger controller, cause the ledger controller to perform operations comprising:
receiving, by the ledger controller, a request to access a distributed ledger;
verifying, by the ledger controller, a public key received from an entity device;
requesting, by the ledger controller, a private login credential from the entity device;
receiving, by the ledger controller, a private key from the entity device;
determining, by the ledger controller, if the private key matches a stored login credential; and
determining, by the ledger controller, if data may be uploaded to the distributed ledger by the entity device.

14. The article of manufacture of claim 13, wherein the operations further comprise:
receiving, by the ledger controller, a request to perform a testing operation configured to generate test data;
determining, by the ledger controller, if a data entry log located on the distributed ledger comprises an data entry including at least one of the test data or a digital signature assigned to the private key is located on the distributed ledger; and
denying, by the ledger controller, the request to perform the testing operation in response to identifying the data entry including at least one of the test data or the digital signature assigned to the private key is located on the distributed ledger.

15. The article of manufacture of claim 13 or 14, wherein the operations further comprise identifying, by the ledger controller, a Custodian_ID based on the private key, and optionally wherein the operations further comprise updating, by the ledger controller, a URL and a Time_Stamp of a dynamic quick response code located on a printed circuit board assembly in response to the entity device disconnecting from the distributed ledger.
